# EUROPÄISCHE PATENTANMELDUNG

(11) **EP 3 375 558 A1**
(43) Veröffentlichungstag der Anmeldung: **19.09.2018**
(21) Anmeldenummer: 17160465.5
(22) Anmeldetag: 13.03.2017
(51) Int. Cl.: B23K 1/002, B23K 1/00, B23K 26/342, B23K 35/02, B23K 101/00

(54) **VERFAHREN ZUM HERSTELLEN EINER KOMPONENTE EINER STRÖMUNGSMASCHINE**

(71) Anmelder: MTU Aero Engines AG, 80995 München (DE)
(72) Erfinder: Richter, Karl-Hermann, 85229 Markt Indersdorf (DE); Hanrieder, Herbert, 85411 Hohenkammer (DE)

(57) **Zusammenfassung**

Die Erfindung betrifft ein Verfahren zum Herstellen einer Komponente einer Strömungsmaschine, wobei die Komponente aus mindestens zwei Segmenten (2) zusammengesetzt wird, die in der fertig zusammengesetzten Komponente bezogen auf einen Umlauf um die Längsachse (3) der Strömungsmaschine aufeinander folgen, und wobei die Segmente (2) erfindungsgemäß in einem induktiven Lötprozess miteinander gefügt werden.

## Beschreibung

### Technisches Gebiet

Die vorliegende Erfindung betrifft ein Verfahren zum Herstellen einer Komponente für eine Strömungsmaschine.

### Stand der Technik

Wie nachstehend im Einzelnen erläutert, handelt es sich bei der Strömungsmaschine bevorzugt um ein Strahltriebwerk. Eine Komponente davon kann Teil eines sogenannten Dichtungsträgers sein, der im Bereich eines Laufschaufelkranzes den Heißgaskanal nach radial außen hin einfasst. Radial innen weist der Dichtungsträger in der Regel einen Einlaufbelag auf, der von einer außerhalb angeordneten Trägerstruktur des Dichtungsträgers getragen wird. Auf eine solche Komponente richtet sich das vorliegend offenbarte Herstellungsverfahren im Besonderen, wenngleich der Gegenstand im Allgemeinen nicht darauf beschränkt ist. So kann die Komponente alternativ zum Beispiel auch ein Dichtungsträger sein, der radial innen eines Leitschaufelkranzes angeordnet ist, und als "static inner air seal" bezeichnet werden kann. Ein derartiger Dichtungsträger wird vorzugsweise, insbesondere wenn er speichenzentriert gelagert wird, als Vollring ausgebildet, d.h. als ein um die Maschinenachse geschlossener 360° Ring.

### Darstellung der Erfindung

Der vorliegenden Erfindung liegt das technische Problem zugrunde, ein besonders vorteilhaftes Verfahren zum Herstellen einer Komponente einer Strömungsmaschine anzugeben.

Erfindungsgemäß wird diese Aufgabe mit den Merkmalen gemäß Anspruch 1 gelöst. Es wird also eine Komponente der Strömungsmaschine aus mindestens zwei Segmenten zusammengesetzt, die unter Zugrundelegung der Einbaulage der Komponente in der Strömungsmaschine umlaufend aufeinander folgen, und zwar bezogen auf einen Umlauf um die Strömungsmaschinen-Längsachse (also die Drehachse des bzw. der Laufkränze). Diese umlaufend aufeinander folgenden Segmente werden erfindungsgemäß in einem induktiven Lötprozess miteinander gefügt.

Bevorzugte Ausführungsformen finden sich in der vorliegenden Beschreibung und in den abhängigen Ansprüchen, wobei in der Darstellung der Merkmale nicht immer im Einzelnen zwischen Verfahrens- und Vorrichtungs- bzw. Verwendungsaspekten unterschieden wird; jedenfalls implizit ist die Offenbarung hinsichtlich sämtlicher Anspruchskategorien zu lesen. Soweit also beispielsweise auf ein Segment bzw. eine Komponente oder allgemein ein Bauteil Bezug genommen wird, das in einer bestimmten Weise hergestellt wird, ist dies zugleich immer auch als Offenbarung eines entsprechend hergestellten Bauteils zu lesen, das also in der geschilderten Art und Weise hergestellt worden ist.

In dem induktiven Lötprozess wird die zum Erwärmen bzw. Schmelzen des die Fügeverbindung bildenden Lots notwendige Wärmeenergie induktiv eingebracht, wird also der elektromagnetische Induktionseffekt zur Wärmeerzeugung genutzt. Dazu wird beispielsweise eine Induktionsspule derart um einen Verbindungsbereich, in welchem die Segmente miteinander gefügt werden sollen, angeordnet, dass sie diesen zumindest weitgehend umschließt. Wird die Induktionsspule dann mit einem Wechselstrom beaufschlagt, kann in dem Verbindungsbereich ein elektrisches Wirbelfeld erzeugt und dem Verbindungsbereich so Wärmeenergie zugeführt werden. Gegenüber einem von den Erfindern alternativ in Erwägung gezogenen Verschweißen der Segmente kann das induktive Löten beispielsweise insoweit vorteilhaft sein, als eine über die Verbindungsflächen homogenere Verbindung resultiert.

Als "Verbindungsfläche" eines jeweiligen Segments wird vorliegend jener Oberflächenbereich davon bezeichnet, der dann über das aufgeschmolzene Lot mit dem anderen Segment verbunden ist. Im Vergleich zu einem von den Erfindern alternativ in Erwägung gezogenen Ofenprozess (Ofenlöten) kann das induktive Löten beispielsweise die Energieeffizienz betreffend Vorteile bieten, weil die Wärmenergie lokal eingebracht werden kann und nicht die Segmente im Gesamten aufgeheizt werden müssen. Damit kann sich zudem ein etwaiger Verzug verringern lassen. Eine besonders vorteilhafte Wechselwirkung ergibt sich ferner, wenn die Segmente zuvor jeweils für sich generativ hergestellt werden, siehe unten im Detail.

Als "Induktionsspule" wird ganz allgemein jede Leitergeometrie verstanden, die ein induktives Einkoppeln und damit Heizen des Verbindungsbereichs ermöglicht. In einem einfachen Fall könnte es sich dabei auch lediglich um eine Leiterschleife handeln, es sind jedoch auch Anordnungen mit mehreren Windungen (mindestens zwei) möglich, die in Form einer Zylinder- oder bevorzugt Flachspule angeordnet sein können. Mögliche Obergrenzen der Windungszahl können beispielsweise bei höchstens 50, 40, 20, 10 bzw. 5 liegen (in Reihenfolge der Nennung zunehmend bevorzugt). Die Induktionsspule kann beispielsweise auch aufklappbar bzw. zu einer Seite hin geöffnet gestaltet sein, sodass sie von der Seite her an den Verbindungsbereich gebracht werden kann, die Segmente also bildlich gesprochen nicht hindurchgefädelt werden müssen.

Unabhängig davon im Einzelnen wird die Induktionsspule dann mit einem Wechselstrom beaufschlagt, beispielsweise im Hochfrequenz-Bereich. Vereinfacht zusammengefasst wird die Induktionsspule dazu an einen Kondensator angeschlossen, ist sie dann also Teil eines Schwingkreises. Dies ist aber an sich beherrscht und vorliegend nicht weiter Gegenstand.

Wie bereits erwähnt, ist die aus den mindestens zwei miteinander gefügten Segmenten aufgebaute Komponente in bevorzugter Ausgestaltung ein Dichtungsträger bzw. ein Teil davon. Die Offenbarung in der Stand-der-Technik-Würdigung wird ausdrücklich in Bezug genommen. Die Segmente des Dichtungsträgers weisen jeweils einen Trägerstrukturabschnitt und einen Einlaufbelagabschnitt auf, wobei diese beiden Abschnitte je Segment bevorzugt ein jeweils im Gesamten generativ hergestelltes Bauteil sind, siehe unten im Detail. Die Trägerstrukturabschnitte der Segmente bilden dann gemeinsam die Trägerstruktur, die Einlaufbelagabschnitte gemeinsam den Einlaufbelag (gleichwohl wird nachstehend etwas vereinfacht auch nur von "Trägerstruktur" oder "Einlaufbelag" gesprochen, selbst wenn von einem einzelnen Segment die Rede ist). Der Einlaufbelag ist vorzugsweise als Wabenstruktur vorgesehen (die Waben sind von der Strömungsmaschinen-Längsachse nach radial außen darauf blickend sichtbar). Bevorzugt ist eine solche Wabenstruktur dann aus demselben Material wie die Trägerstruktur vorgesehen, besonders bevorzugt werden bzw. sind die Abschnitte je Segment gemeinsam generativ gefertigt.

Bevorzugt ist beim induktiven Löten der Einlaufbelag, insbesondere die Wabenstruktur, mit einem sogenannten Stop-Off -Mittel versehen, das einer Ausbreitung des Lots auf den Einlaufbelag vorbeugen hilft. Das Lot könnte anderenfalls bspw. die Wabenstruktur zusetzen und zumindest einem gleichmäßigen Abtrag zuwiderlaufen, gegebenenfalls auch weitergehende Schäden hervorrufen.

Alternativ zu dem Dichtungsträger kann die Komponente im Allgemeinen beispielsweise auch ein Teil eines Leitschaufelkranzes sein. Ein Segment kann dabei genau eine oder bevorzugt auch mehrere Leitschaufeln aufweisen. Eine jeweilige Leitschaufel erstreckt sich radial zwischen Innen- und Außendeckband, wobei im Falle des Mehrfach-Segments (mit mehreren Leitschaufeln) dessen Leitschaufeln integral über den Innen- und/oder Außendeckbandabschnitt zusammenhängen (bevorzugt beides). Mit dem erfindungsgemäßen Verfahren werden dann mindestens zwei Leitschaufel-Segmente (mit jeweils genau einer oder auch mehreren Leitschaufeln) induktiv miteinander verlötet, werden also die Innendeckbandabschnitte und/oder die Außendeckbandabschnitte miteinander gefügt, bevorzugt beide.

Bei einer bevorzugten Ausführungsform, welche die als Dichtungsträger bzw. Teil davon vorgesehene Komponente betrifft, ist die Komponente eine erste Halbschale des Dichtungsträgers, die mit einer zweiten Halbschale zu dem Dichtungsträger zusammenbaubar ist. Das Zusammenbauen kann beispielsweise form- und/oder kraftschlüssig erfolgen, die erste und die zweite Halbschale bilden dann gemeinsam den umlaufend in sich geschlossenen Dichtungsträger. Dabei muss sich im Allgemeinen nicht jede der Halbschalen umlaufend über einen Winkelbereich von genau 180° erstrecken, sondern kann die eine Halbschale auch etwas größer und die andere komplementär dazu kleiner sein. Unabhängig davon im Einzelnen ist bevorzugt jede der beiden Halbschalen für sich aus mehreren Segmenten zusammengesetzt, die je Halbschale induktiv miteinander verlötet werden bzw. sind. Bevorzugt wird jede der Halbschalen jeweils aus mindestens drei Segmenten zusammengesetzt und gibt es entsprechend mindestens zwei Fügeverbindungen je Halbschale, besonders bevorzugt sind genau drei Segmente und damit zwei Fügeverbindungen je Halbschale.

Bei einer bevorzugten Ausführungsform sind die Segmente, die in dem induktiven Lötprozess miteinander gefügt werden, zuvor jeweils für sich generativ hergestellte Bauteile. Ganz allgemein ausgedrückt werden die Segmente dabei jeweils anhand eines Datenmodells aus einem formlosen oder formneutralen Material aufgebaut, das beispielsweise mittels physikalischer Prozesse, etwa durch ein selektiv lokales Aufschmelzen, in einen formfesten Zustand übergeführt wird. Dementsprechend ist eine große Bandbreite an Geometrien möglich, kann also beispielsweise die Trägerstruktur des Dichtungsträgers einerseits in Bezug auf strukturmechanische Anforderungen optimiert werden, bspw. durch Stege und Rippen etc. Andererseits kann bspw. die Wabenstruktur als Einlaufbelag integral angeformt sein, also während desselben generativen Herstellungsprozesses gebildet werden. Deshalb kann die generative Herstellung im Falle des Dichtungsträgers besondere Vorteile bieten. Um den Aufwand bei der Erstellung der Datenmodelle gering zu halten, kann es bevorzugt sein, dass die einzelnen Segmente im Wesentlichen identisch zueinander ausgebildet sind.

Die Erfinder haben jedoch festgestellt, dass es zumindest technisch aufwendig sein kann, eine Dichtungsträger-Halbschale im Gesamten generativ herzustellen, mitunter ist dies auch gar nicht möglich, beispielsweise, weil der hierfür vorhandene Bauraum in der entsprechenden Fertigungsanlage nicht ausreicht. Das induktive Verlöten der Segmente hat nun mit deren Herstellung als jeweils für sich generativ erzeugte Bauteile eine vorteilhafte Wechselwirkung dahingehend, dass einerseits mit dem generativen Aufbau komplexe Geometrien realisiert werden, und andererseits mit dem induktiven Löten auch eine entsprechend zergliederte Verbindungsfläche (vergleiche das Ausführungsbeispiel zur Illustration) auf einfache Weise und im Ergebnis gleichmäßig fügeverbunden werden kann. Zum Vergleich, nochmals unter Verweis auf die im Ausführungsbeispiel gezeigte Verbindungsfläche - wollte man diese zergliederte Verbindungsfläche schweißverbinden, müsste aufwendig entlang des Außenumfangs mit Stufen und Kanten gearbeitet werden.

In bevorzugter Ausgestaltung werden die Segmente jeweils für sich aus einem Pulverbett aufgebaut. Der Werkstoff, aus dem ein jeweiliges Segment hergestellt wird, wird also in Pulverform sequenziell Schicht für Schicht aufgetragen, wobei je Schicht selektiv ein anhand des Datenmodells vorbestimmter Bereich verfestigt wird. Die Verfestigung erfolgt bevorzugt durch ein Aufschmelzen mittels einer Strahlquelle. Soweit im Allgemeinen auch eine Elektronenstrahlquelle denkbar ist, wird bevorzugt mit einer Laserquelle aufgeschmolzen. Bevorzugt erfolgt der generative Aufbau also durch Selektives Laserschmelzen (SLM).

Im Folgenden wird das induktive Löten weiter im Detail erläutert.

Bei einer bevorzugten Ausführungsform ist das Lot in Form einer Folie vorgesehen, die dann in dem induktiven Lötprozess aufgeschmolzen wird. Die Lotfolie kann beispielsweise eine Dicke von mindestens 15 µm, weiter und besonders bevorzugt mindestens 20 µm bzw. 25 µm haben, wobei mögliche Obergrenzen (davon unabhängig) beispielsweise bei höchstens 100 µm, 90 µm, 80 µm, 70 µm, 60 µm bzw. 50 µm liegen können (in der Reihenfolge der Nennung zunehmend bevorzugt).

In bevorzugter Ausgestaltung ist die Lotfolie beim Zusammensetzen der Segmente an einem der Segmente befestigt, also an einer der beiden Verbindungsflächen, die dann danach aber über das Lot miteinander verbunden sind. Auf diese Weise lässt sich beispielsweise trotz einer Verbindungsfläche mit komplexer Geometrie (siehe vorne) eine reproduzierbar genaue Positionierung des Lots erreichen.

In bevorzugter Ausgestaltung wird die Lotfolie an die entsprechende Verbindungsfläche geklebt. Das Vorsehen von Klebstoff zur Befestigung kann beispielsweise insoweit vorteilhaft sein, als dieser dann unter Vakuumbedingungen, die beim induktiven Löten bevorzugt sein können (siehe unten im Detail), verdampfen kann und so die Qualität der Lotverbindung nicht beeinträchtigt wird.

Bei einer bevorzugten Ausführungsform wird bzw. ist die Folie in ihrer Form an eine Querschnittsfläche der Segmente angepasst, bevorzugt wird sie mit einem Laserstrahl entsprechend zugeschnitten. Die in ihrer Form angepasste Folie kann beispielsweise einen Außenumfang mit einem gestuften Verlauf und/oder sich zumindest abschnittsweise schräg zueinander (nicht senkrecht und nicht parallel zueinander) erstreckende Linien haben. Alternativ oder zusätzlich kann aus der vom Außenumfang eingefassten Fläche auch ein Teil herausgetrennt sein, kann in die Folie also ein Loch eingebracht werden. Dieses kann dann auch seinerseits von einem mit Stufen und/oder schräg zueinander angestellten Linien gebildeten Innenumfang eingefasst sein. Soweit generell in Bezug auf die Folie auf einen Umfang bzw. ein "Eingefasstsein" bezuggenommen wird, bezieht sich dies auf die Flächenrichtungen der Folie, die senkrecht zur Dickenrichtung liegen (in der die Folie die kleinste Erstreckung hat).

Mit der in ihrer Form angepassten Lotfolie wird eine Querschnittsfläche angenähert, die ein jeweiliges Segment in einer die Strömungsmaschinen-Längsachse beinhaltenden Schnittebene in unmittelbarer Nähe der Verbindungsfläche hat. Es wird also eine komplexere, bevorzugt durch generativen Aufbau erzeugte Geometrie über die Verbindungsflächen hinweg fortgesetzt. "Angepasst" kann beispielsweise meinen, dass die Fläche der Lotfolie und die Querschnittsfläche einen Überlapp haben, der mindestens 60 %, 70 % bzw. 80 % der größeren der beiden Flächen ausmacht (in der Reihenfolge der Nennung zunehmend bevorzugt). Mögliche Obergrenzen können (davon unabhängig) beispielsweise bei höchstens 95 % bzw. 90 % liegen. Im Einzelnen wird für diesen Vergleich der Flächen die Fläche der Lotfolie in Umlaufrichtung in eine die Querschnittsfläche beinhaltende Ebene projiziert.

Generell, also auch unabhängig von dem Vorhalten in Folienform, kann ein Nickelbasislot bevorzugt sein, beispielsweise AMS 4777.

Bei einer bevorzugten Ausführungsform beträgt eine Aufwärmzeit des induktiven Lotprozesses höchstens 15 min. in der Reihenfolge der Nennung zunehmend bevorzugt höchstens 12 min., 10 min., 8 min., 6 min. bzw. 4 min. Technisch bedingt können Untergrenzen beispielsweise bei mindestens 1 min., 2 min. bzw. 3 min. liegen. Auch unabhängig von der Aufwärmzeit im Einzelnen beträgt die Haltezeit bevorzugt höchstens 5 min., 4 min., 3 min., 2 min. bzw. 1 min. (in der Reihenfolge der Nennung zunehmend bevorzugt), wobei mögliche Untergrenzen beispielsweise bei mindestens 20 s, 30 s bzw. 40 s liegen können. Während der Aufwärmzeit werden die Segmente im Bereich der Verbindungsflächen und wird das Lot auf die gewünschte Temperatur gebracht, steigt diese also an. Während der Haltezeit wird dann jedenfalls im Rahmen des technisch Möglichen eine konstante Temperatur gehalten.

Generell kann die Dauer des induktiven Lötprozesses, unter Berücksichtigung von Aufwärmen und Halten, vorteilhafterweise vergleichsweise kurz gehalten werden, nämlich beispielsweise maximal 20 min, 10 min. bzw. 5 min. betragen. Dies ermöglicht einen hohen Durchsatz, was insbesondere gegenüber einem Ofenprozess Vorteile bieten kann. Mögliche Untergrenzen der Prozessdauer können beispielsweise bei mindestens 1 min., 2 min. bzw. 3 min. liegen.

Bei einer bevorzugten Ausführungsform wird die Komponente aus mindestens drei Segmenten zusammengesetzt, es wird auch auf die vorstehenden Anmerkungen zu der Dichtungsträger-Halbschale verwiesen. Es ist dann jedenfalls ein mittleres Segment umlaufend zwischen mindestens zwei, bevorzugt genau zwei weiteren Segmenten eingefasst. Das mittlere Segment wird dann sowohl mit dem einen Segment als auch mit dem umlaufend entgegengesetzt angeordneten Segment induktiv verlötet.

In bevorzugter Ausgestaltung werden diese beiden Lötprozesse simultan vorgenommen, also gleichzeitig. Es wird also an dem einen Ende des mittleren Segments eine erste Induktionsspule platziert und an dem umlaufend entgegengesetzten Ende eine zweite Induktionsspule, wobei diese Induktionsspulen dann gleichzeitig mit einem Wechselstrom beaufschlagt werden. Dies kann beispielsweise über eine entsprechende Ansteuerung der beiden Schwingkreise erfolgen, es ist aber anderseits auch eine weitergehende (analoge) Verschaltung der Induktionsspulen denkbar. Unabhängig davon im Einzelnen kann das simultane Verlöten beispielsweise insoweit vorteilhaft sein, als die Gesamt-Prozesszeit reduziert und gegebenenfalls auch ein Verzug der Segmente verringert werden kann.

In bevorzugter Ausgestaltung wird der induktive Lötprozess unter Schutzatmosphäre vorgenommen, bevorzugt in einer Kammer (wenngleich im Allgemeinen bspw. auch ein Umspülen denkbar ist). Ganz allgemein soll die Schutzatmosphäre einen gegenüber Luft verringerten Sauerstoffanteil haben. Die Schutzatmosphäre kann also bspw. durch zumindest teilweises Evakuieren und/oder durch ein Inertgas eingestellt sein, bspw. Argon oder Helium. Bevorzugt weist die Kammer ein Schleusensystem auf, es muss also der eigentliche Prozessraum beim Beschicken und Entladen atmosphärisch zumindest nicht vollständig auf Umgebungsniveau gebracht werden.

Die Erfindung betrifft auch eine Komponente einer Strömungsmaschine, insbesondere einen Teil eines Dichtungsträgers, insbesondere eine Dichtungsträger-Halbschale, die in einer vorliegend offenbarten Weise hergestellt ist.

Ferner betrifft die Erfindung auch eine Strömungsmaschine, insbesondere ein Strahltriebwerk, die eine entsprechend hergestellte Komponente aufweist, insbesondere eine Dichtungsträger-Halbschale.

### Kurze Beschreibung der Figuren

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur. 1: drei Segmente einer Dichtungsträger-Halbschale, die induktiv miteinander verlötet werden;
- Figur 2: eine Lotfolie, die in dem Lötprozess gemäß Fig. 1 zwischen zwei Segmenten angeordnet wird;
- Figur 3: eines der dann gemäß Fig. 1 miteinander verlöteten Segmente in Umlauf richtung darauf blickend.

### Bevorzugte Ausführung der Erfindung

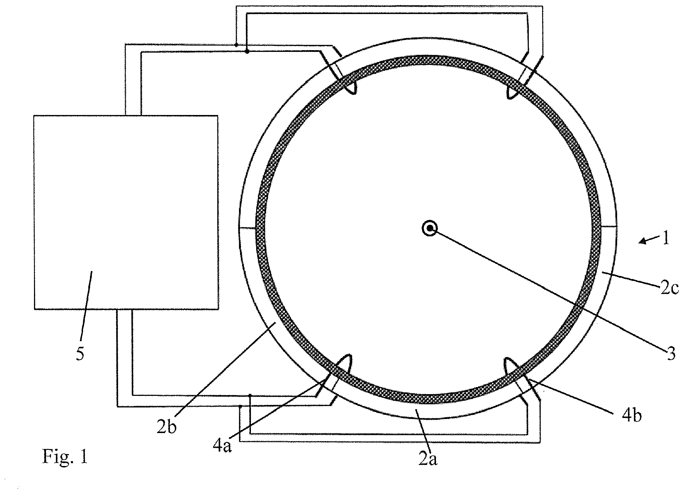

Fig. 1 illustriert in schematischer Darstellung, wie eine Halbschale 1 eines Dichtungsträgers eines Strahltriebwerks aus drei Segmenten zusammengesetzt wird. Die Segmente 2 werden dabei relativ zueinander derart angeordnet, dass sie bezogen auf einen Umlauf um die Längsachse 3 aufeinander folgen, also das mittlere Segment 2a von den Segmenten 2b und c umlaufend eingefasst wird.

Die Segmente 2 werden dann induktiv miteinander verlötet, es wird also das mittlere Segment 2a an seinem einen Ende mit dem Segment 2b und an seinem entgegengesetzten Ende mit dem Segment 2c verlötet. Dabei wird jede der Fügeverbindungen mit einer jeweilig eigenen Induktionsspule 4 hergestellt. Konkret umschließt also die erste Induktionsspule 4a den Verbindungsbereich zwischen dem mittleren Segment 2a und dem Segment 2b und umschließt die zweite Induktionsspule 4b den Verbindungsbereich zwischen dem mittleren Segment 2a und dem Segment 2c. Jede der Induktionsspulen 4 wird dann mit einem Wechselstrom beaufschlagt, womit in dem jeweiligen Verbindungsbereich Wirbelströme erzeugt werden und so Energie eingebracht wird.

Die Induktionsspulen 4 sind dazu an einen Hochfrequenz-Generator 5 angeschlossen (im Prinzip werden sie mit einem Kondensator zu einem Schwingkreis verbunden). Vorliegend werden die erste 4a und die zweite Induktionsspule 4b gleichzeitig mit dem Wechselstrom beaufschlagt, werden also die zwei Fügeverbindungen simultan hergestellt. Dies kann bspw. den Durchsatz betreffend und auch hinsichtlich einer Verringerung des Verzugs beim Verlöten Vorteile bieten.

Die entsprechend hergestellte Halbschale 1 kann dann mit einer weiteren, in analoger Weise durch Fügen mehrerer Segmente hergestellten Halbschale zu dem Dichtungsträger zusammengebaut werden. Die beiden Halbschalen bilden dann einen um die Längsachse 3 umlaufenden Ring.

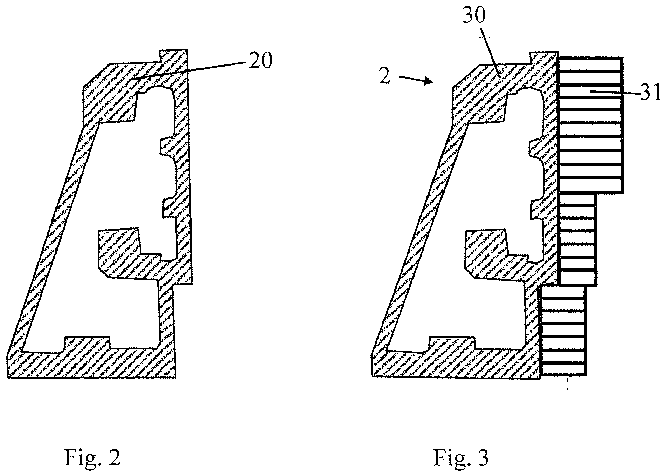

In Fig. 1 sind die Segmente 2 vereinfacht als Kreisringsegmente dargestellt. In realiter haben sie eine komplexere Geometrie, vgl auch Fig. 3 zur Illustration. Das Lot, vorliegend ein Nickelbasislot, wird als Lotfolie 20 in den jeweiligen Verbindungsbereich eingebracht. Fig. 2 zeigt eine solche Lotfolie 20, die in ihrem Außenumfang an eine Querschnittsform der Segmente 2 angepasst ist, also im Außenumfang einen gestuften und auch schrägen Verlauf hat. Ferner ist die Lotfolie 20 in Berücksichtigung der komplexen Dichtungsträger-Geometrie auch mit einem Loch gefasst, also auch mit einem Innenumfang angepasst. Somit lässt sich einerseits eine soweit möglich großflächige Lotverbindung zwischen den Segmenten 2 realisieren, und kann andererseits bspw. auch einer unbeabsichtigten Anlagerung von Lot außerhalb des Verbindungsbereichs vorgebeugt werden.

Die Lotfolie 20 wird vor dem Zusammensetzen der Segmente 4 auf einen Verbindungsbereich eines der Segmente 4 geklebt. Da das in Fig. 1 schematisch illustrierte induktive Verlöten bevorzugt unter Vakuumbedingungen erfolgt, kann sich der Klebstoff dann verflüchtigen und wird die Qualität der Lötverbindung nicht beeinträchtigt.

Fig. 3 zeigt ein Segment 2 in umlaufrichtung daraufblickend, wobei einerseits eine Trägerstruktur 30 des Dichtungsträgers und andererseits dessen Einlaufbelag 31 zu erkennen sind. Der Einlaufbelag 31 ist wabenförmig aufgebaut, das Segment wird im Gesamten in dieser Form generativ hergestellt. Dies ermöglicht einerseits eine vergleichsweise komplexe, hinsichtlich der Strukturmechanik optimierte Geometrie der Trägerstruktur 30; andererseits kann der Einlaufbelag in demselben Herstellungsprozess aus demselben Material aufgebaut werden. Das vorliegend gezeigte Segment wird dabei aus einem Pulverbett aufgebaut, und zwar durch Selektives Laserstrahlschmelzen. In analoger Weise werden die zwei weiteren Segmente 2 der Halbschale 1 jeweils für sich generativ hergestellt. Anschließend werden sie analog der vorstehenden Beschreibung miteinander verlötet.

### BEZUGSZEICHENLISTE

- Halb schale: 1
- Segmente: 2
- mittleres Segment: 2a
- weitere Segmente: 2b, c
- Längsachse: 3
- Lotfolie: 20
- Trägerstruktur: 30
- Einlaufbelag: 31

## Patentansprüche

1. Verfahren zum Herstellen einer Komponente einer Strömungsmaschine,
wobei die Komponente aus mindestens zwei Segmenten (2) zusammengesetzt wird, die in der fertig zusammengesetzten Komponente bezogen auf einen Umlauf um die Längsachse (3) der Strömungsmaschine aufeinander folgen,
**dadurch gekennzeichnet, dass**
die Segmente (2) in einem induktiven Lötprozess miteinander gefügt werden.

2. Verfahren nach Anspruch 1, bei welchem die Komponente zumindest ein Teil eines Dichtungsträgers der Strömungsmaschine ist.

3. Verfahren nach Anspruch 2, bei welchem die Komponente eine erste Halbschale (1) des Dichtungsträgers ist, die mit einer zweiten Halbschale zu dem Dichtungsträger zusammenbaubar ist, wobei auch die zweite Halbschale aus mindestens zwei Segmenten zusammengesetzt wird, die in einem induktiven Lötprozess miteinander gefügt werden.

4. Verfahren nach einem der vorstehenden Ansprüche, bei welchem die Segmente (2), die in dem induktiven Lötprozess miteinander gefügt werden, zuvor jeweils für sich generativ hergestellt werden.

5. Verfahren nach Anspruch 4, bei welchem die Segmente (2) in einem Pulverbettverfahren hergestellt werden, vorzugsweise durch Selektives Laserschmelzen.

6. Verfahren nach einem der vorstehenden Ansprüche, bei welchem ein Lot, mit dem die Segmente (2) an ihren Verbindungsflächen miteinander gefügt werden, bei dem Zusammensetzen der Segmente (2) in Form einer Folie (20) vorgehalten wird, welche Lotfolie (20) dann in dem induktiven Lötprozess aufgeschmolzen wird.

7. Verfahren nach Anspruch 6, bei welchem die Lotfolie (20) vor dem Zusammensetzen der Segmente (2) an einem der Segmente (2), nämlich an einer der Verbindungsflächen, befestigt wird.

8. Verfahren nach Anspruch 7, bei welchem die Lotfolie (20) an die Verbindungsfläche geklebt wird.

9. Verfahren nach einem der Ansprüche 6 bis 8, bei welchem die Lotfolie (20) in ihrer Form an eine Querschnittsfläche der Segmente (2) angepasst wird, vorzugsweise durch Schneiden mit einem Laserstrahl.

10. Verfahren nach einem der vorstehenden Ansprüche, bei welchem eine Aufwärmzeit des induktiven Lötprozesses höchstens 15 Minuten beträgt und/oder eine Haltezeit des induktiven Lötprozesses höchstens 5 Minuten beträgt.

11. Verfahren nach einem der vorstehenden Ansprüche, bei welchem die Komponente aus mindestens drei Segmenten (2) derart zusammengesetzt wird, dass in der fertig zusammengesetzten Komponente ein mittleres (2a) der Segmente (2) umlaufend zwischen zwei weiteren (2b,c) der Segmente (2) angeordnet ist, wobei das mittlere Segment (2a) in dem induktiven Lötprozess mit einem (2b) der zwei weiteren Segmente (2b,c) gefügt wird und auch mit dem anderen (2c) der zwei weiteren Segmente (2b,c) in einem induktiven Lötprozess gefügt wird.

12. Verfahren nach Anspruch 11, bei welchem die induktiven Lötprozesse simultan vorgenommen werden.

13. Verfahren nach einem der vorstehenden Ansprüche, bei welchem der induktive Lötprozess bzw. die induktiven Lötprozesse unter Schutzatmosphäre vorgenommen wird bzw. werden.

14. Komponente einer Strömungsmaschine, hergestellt in einem Verfahren nach einem der vorstehenden Ansprüche.

15. Strömungsmaschine, insbesondere Strahltriebwerk, mit einer Komponente nach Anspruch 14.
